# EUROPÄISCHE PATENTANMELDUNG

(11) **EP 2 431 622 A1**
(43) Veröffentlichungstag der Anmeldung: **21.03.2012**
(21) Anmeldenummer: 11007397.0
(22) Anmeldetag: 12.09.2011
(51) Int. Cl.: F16C 19/52, F16C 33/32, F16C 33/34, F16C 33/36

(54) **Rotierbares Wälzlager**

(30) Priorität: 21.09.2010 DE 102010045912; 08.02.2011 DE 202011002485 U
(71) Anmelder: Deutsches Zentrum für Luft- und Raumfahrt e. V., 51147 Köln (DE)
(72) Erfinder: Abildgaard, Max, 38108 Braunschweig (DE)
(74) Vertreter: Günther, Constantin

(57) **Zusammenfassung**

Die Erfindung betrifft ein rotierbares Wälzlager (1) mit einem ersten Lagerring (2), einem gegenüber dem ersten Lagerring (2) rotierbaren zweiten Lagerring (3) und einer Mehrzahl von Wälzkörpern (4), die zwischen dem ersten und dem zweiten Lagerring (2, 3) angeordnet sind, wobei wenigstens ein Wälzkörper (4) als elektrischer Sensor ausgebildet ist, derart, dass der Wälzkörper (4) dazu eingerichtet ist, eine direkt elektrisch erfassbare Kenngröße in Abhängigkeit von einer auf diesen Wälzkörper (4) ausgeübten Kraft zu ändern. Die Erfindung betrifft außerdem einen Wälzkörper für ein derartiges Wälzlager sowie eine Einrichtung mit einem Wälzlager und einer elektrischen Überwachungseinrichtung.

## Beschreibung

Die Erfindung betrifft ein rotierbares Wälzlager gemäß dem Oberbegriff des Anspruchs 1. Die Erfindung betrifft außerdem einen Wälzkörper für ein derartiges Wälzlager gemäß dem Anspruch 15 sowie eine Einrichtung mit einem Wälzlager und einer elektrischen Überwachungseinrichtung gemäß dem Anspruch 16.

Generell betrifft die Erfindung das Gebiet der Überwachung von Wälzlagern in deren Betrieb. Als Wälzlager seien in diesem Zusammenhang alle Arten von Lagern verstanden, bei denen zwei zueinander bewegliche Komponenten, nämlich ein erster Lagerring und ein zweiter Lagerring, durch rollende Körper voneinander getrennt sind. Umfasst sind insbesondere Kugellager, Rollenlager und Nadellager in jeglicher Ausführungsform, insbesondere als Radiallager oder Axiallager. Entsprechend kann der Wälzkörper z.B. eine Kugel, eine Zylinder-, Kegel- oder Tonnenrolle oder, im Falle eines Nadellagers, eine Nadelhülse sein.

Wälzlager werden überall im Maschinenbau eingesetzt. Sie sind langlebig und einfach anwendbar, können aber auch Defekte entwickeln, die zu hohen Reparaturkosten führen können. Typische Defekte sind sogenannte Pittings, bei denen sich kleine Druckstellen und/oder Abplatzungen in den Wälzkörper-Laufbahnen bilden. Solche Pittings entstehen meistens schleichend und können detektiert werden. Für einen Betreiber einer Maschine, in der ein solches Wälzlager betrieben wird, besteht häufig ein Interesse an einer Vorhersage, wann eine Reparatur bzw. ein Austausch des Wälzlagers erforderlich ist. Zu diesem Zweck werden bisher typischerweise Körperschallmessungen durchgeführt. Hierbei wird ein Beschleunigungssensor, der ähnlich wie ein Mikrofon wirkt, zur Erfassung der Schwingungen des Wälzlagers verwendet. Hierdurch können insbesondere die charakteristischen Geräusche, die von den Wälzkörpern verursacht werden, wenn sie über die Pittings rollen, aufgenommen werden. Allerdings ist eine solche Körperschallanalyse relativ aufwendig und teuer und kann nicht immer genau ein defektes Wälzlager lokalisieren.

Der Erfindung liegt daher die Aufgabe zugrunde, ein rotierbares Wälzlager anzugeben, das verbesserte Diagnosemöglichkeiten bietet, und einen Wälzkörper hierfür anzugeben. Ferner soll eine Möglichkeit zur Überwachung eines solchen Wälzlagers angegeben werden.

Diese Aufgabe wird durch die in den Ansprüchen 1, 15 und 16 angegebene Erfindung gelöst. Die abhängigen Ansprüche geben vorteilhafte Ausgestaltungen der Erfindung an.

Gemäß der Erfindung wird ein vollständig anderes Prinzip vorgeschlagen als die bisher für die Diagnose von Wälzlagern verwendete Signalerfassung durch außen am Wälzlager oder dessen Umgebung angeordnete Sensoren. Erfindungsgemäß ist wenigstens ein Wälzkörper des Wälzlagers selbst als elektrischer Sensor ausgebildet, und zwar derart, dass durch diesen Wälzkörper eine direkt elektrisch erfassbare Kenngröße variierbar ist, und zwar in Abhängigkeit von einer auf diesen Wälzkörper ausgeübten Kraft. Somit wird der Wälzkörper selbst druckempfindlich gemacht. Der Wälzkörper ist damit als hinsichtlich einer elektrischen Kenngröße variables Bauteil ausgebildet. Vorteilhaft kann hiermit eine Erfassung der elektrisch erfassbaren Kenngröße sowohl bei Stillstand des Wälzlagers als auch bei rotierendem Wälzlager erfolgen. Eine Verbindung des als elektrischen Sensor ausgebildeten Wälzkörpers mit elektrischen Leitungen zur Erfassung der Kenngröße ist nämlich nicht erforderlich. Vielmehr kann bei elektrisch leitfähiger Ausbildung des ersten Lagerrings und des zweiten Lagerrings die Erfassung der Kenngröße direkt an diesen Bauteilen erfolgen, z.B. über einen fest angebrachten elektrischen Kontakt am stehenden Lagerring und einen Schleifkontakt am rotierenden Lagerring. Durch den als elektrischer Sensor ausgebildeten Wälzkörper ist somit eine Kenngröße des Wälzkörpers in Abhängigkeit von der auf den Wälzkörper ausgeübten Kraft bzw. dem Druck variabel. Dies hat zur Folge, dass auch eine Kenngröße des Wälzlagers in Abhängigkeit von der auf den Wälzkörper ausgeübten Kraft bzw. dem Druck variabel ist.

Ein weiterer Vorteil der Erfindung ist, dass eine völlig kontinuierliche Erfassung des Lagerzustands über den gesamten Umfang des Wälzlagers mit der Erfindung möglich wird. Dies ist darin begründet, dass die Wälzkörper selbst als Sensoren fungieren. Da die Wälzkörper im Betrieb des Wälzlagers kontinuierlich über den gesamten Lagerumfang abrollen, kann jede Stelle des Umfangs erfasst werden. Auf diese Weise ist mit der Erfindung eine auch räumlich präzisere Erfassung von Effekten möglich, im Vergleich z.B. zu diskret verteilten Sensoren.

Die Erfindung hat den weiteren Vorteil, dass eine direkt elektrisch erfassbare Kenngröße variierbar ist. Als direkt elektrisch erfassbare Kenngröße wird jede Kenngröße verstanden, die mit elektrischen Mitteln ohne Umwandlung in eine andere physikalische Größe, z.B. Licht oder Bewegung, direkt erfasst werden kann. Dies erlaubt eine Erfassung der Kenngröße mit nur geringem Aufwand, insbesondere ohne besondere Sensoren, die von einer physikalischen Größe in eine andere physikalische Größe wandeln, wie z.B. mechanische Bewegungen in ein elektrisches Signal. Als direkt elektrisch erfassbare Kenngröße kommt grundsätzlich jede durch elektrische Sensoren direkt erfassbare elektrische Größe in Frage, wie z.B. Spannung, Strom, Widerstand, Kapazität oder Induktivität des Wälzlagers und/oder des Wälzkörpers.

Die Erfindung hat den weiteren Vorteil, dass die von dem rotierbaren Wälzlager aufnehmbare elektrisch erfassbare Kenngröße mit vorhandenen Auswertesystemen ausgewertet werden kann. Es ist lediglich eine elektrische Adaption auf die Signalart erforderlich.

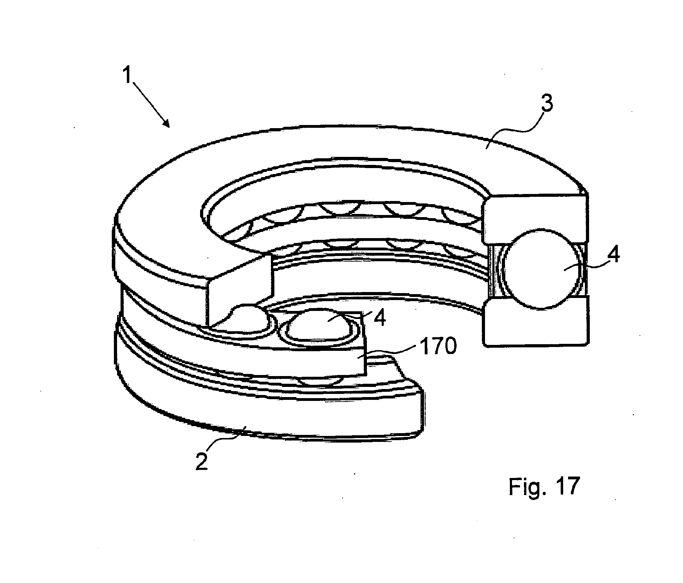

Die Erfindung eignet sich sowohl für Radiallager, Axiallager oder Abwandlungen davon. Im Falle eines Radiallagers ist der anspruchsgemäße erste Lagerring z. B. der innere Lagerring, der zweite Lagerring ist dann der äußere Lagerring. Im Falle eines Axiallagers ist der anspruchsgemäße erste Lagerring z. B. der in Figur 17 abgebildete untere Lagerring, der zweite Lagerring ist dann der obere Lagerring.

Gemäß einer vorteilhaften Weiterbildung ist der als elektrischer Sensor ausgebildete Wälzkörper als piezoelektrischer Sensor oder als piezoresistiver Sensor ausgebildet. Bei Ausbildung als piezoelektrischer Sensor gibt der Sensor druckabhängig als elektrische Kenngröße eine Spannung bzw. einen Strom ab. Bei Ausbildung als piezoresistiver Sensor weist der Wälzkörper einen von der einwirkenden Kraft abhängigen, variablen elektrischen Widerstand auf. Beide Alternativen erlauben eine kostengünstige industrielle Großserienproduktion solcher Wälzkörper und damit ausgestatteter Wälzlager und eine einfache und genaue Signalerfassung.

Gemäß einer vorteilhaften Weiterbildung der Erfindung ist der als elektrischer Sensor ausgebildete Wälzkörper aus einem piezoresistiven Material hergestellt oder weist eine auf einem inneren Kern des Wälzkörpers aufgebrachte Beschichtung aus einem piezoresistiven Material auf. Piezoresistive Materialien haben den Vorteil, dass sie preisgünstig verfügbar sind und gut verarbeitbar sind. Die zweite Alternative, bei der auf einen inneren Kern des Wälzkörpers eine Beschichtung aus dem piezoresistiven Material aufgebracht ist, hat den Vorteil, dass sparsamer mit dem piezoresistiven Material umgegangen werden kann und damit eine kostengünstigere Herstellung möglich ist. Der Kern des Wälzkörpers kann dabei aus einem üblichen Material für Wälzkörper bestehen, wie z.B. Stahl oder Keramik. Vorteilhaft ist insbesondere ein relativ harter Kern zur Sicherstellung einer langlebigen Funktion des Wälzlagers. Vorteilhaft kann die Beschichtung aus dem piezoresistiven Material als Dünnschicht auf dem Wälzkörper aufgebracht werden. Dies hat den Vorteil, dass herkömmliche Wälzkörper, z.B. Kugeln oder Kegelrollen, praktisch unverändert als Ausgangsbauteil verwendet werden können, mit der Beschichtung versehen werden können und in ein ansonsten hinsichtlich seiner Geometrie ebenfalls unverändertes Wälzlager vorhandener Bauart eingebaut werden können. Die Beschichtung weist vorteilhaft eine Dicke von ungefähr 6 µm auf.

Gemäß einer vorteilhaften Weiterbildung der Erfindung ist die Beschichtung aus dem piezoresistiven Material mit dotiertem oder undotiertem Kohlenwasserstoff oder reinem Kohlenstoff hergestellt. Gemäß einer vorteilhaften Weiterbildung der Erfindung ist auf diese piezoresistive Sensorschicht wenigstens eine Verschleißschutzschicht aufgebracht. Die Verschleißschutzschicht ist vorteilhaft elektrisch leitfähig ausgebildet. Sofern der Wälzkörper aus dem piezoresistiven Material hergestellt ist, kann die Verschleißschutzschicht auf den Wälzkörper aufgebracht sein. Als Material für die Verschleißschutzschicht kann z.B. ein dotierter Kohlenwasserstoff oder diamantartiger Kohlenstoff verwendet werden.

Gemäß einer vorteilhaften Weiterbildung der Erfindung ist die Beschichtung homogen auf den Wälzkörper aufgebracht. Die Beschichtung weist vorteilhaft überall in etwa dieselbe Schichtdicke auf. Gemäß einer vorteilhaften Weiterbildung der Erfindung bedeckt die Beschichtung den gesamten Wälzkörper oder wenigstens die Flächen des Wälzkörpers, die beim Abrollen lastaufnehmend sind. So ist z.B. bei einem Zylinderrollenlager oder einem Kegelrollenlager ausreichend, nur die Laufflächen der Wälzkörper mit der Beschichtung zu versehen. Bei einem Kugellager ist es vorteilhaft, die Kugeln an der gesamten Außenfläche mit der Beschichtung zu versehen.

Gemäß einer vorteilhaften Weiterbildung der Erfindung weist die Verschleißschutzschicht eine Mehrzahl leitfähiger Zonen auf, die gegeneinander isoliert oder zumindest hochohmig im Vergleich zu den Wälzkörpern sind. Es wurde festgestellt, dass es wichtig ist, dass die Verschleißschutzschicht die richtigen elektrischen Eigenschaften hat: sie muss einerseits so gut leitend sein, damit eine elektrische Verbindung besteht, und sie muss andererseits so schlecht leitend sein, dass der Strom nicht einfach durch sie hindurch läuft, ohne die piezoresistive Sensorschicht zu passieren. Außerdem muss die Verschleißschutzschicht verschleißfest sein. Dieses Optimierungsproblem kann gelöst werden, indem die Verschleißschutzschicht inhomogen gestalten ist, z.B. dadurch, dass sie in viele kleine Bereiche eingeteilt ist, die zu einander eine schlechte Leitfähigkeit haben. Die Verschleißschutzschicht z.B. auch in kleinen, von einander abgegrenzten Zonen geformt sein kann. So zwingt man den Strom dazu, in die piezoresistive Sensorschicht zu laufen.

Gemäß einer vorteilhaften Weiterbildung der Erfindung ist der zweite Lagerring gegenüber dem ersten Lagerring isoliert oder zumindest hochohmig im Vergleich zu den Wälzkörpern. Dies hat den Vorteil, dass ein elektrischer Stromfluss nur definiert über den als elektrischer Sensor ausgebildeten Wälzkörper erfolgt und kein direkter Stromfluss von dem zweiten Lagerring zum ersten Lagerring erfolgen kann. Hierdurch kann die Erfassungsgenauigkeit der elektrisch erfassbaren Kenngröße verbessert werden. Vorteilhaft hat der Übergangswiderstand von dem zweiten Lagerring zu dem ersten Lagerring einen wenigstens zehnmal so großen Wert wie der über die Wälzkörper im druckunbelasteten Fall gebildete Widerstand.

Die Erfindung umfasst die Möglichkeit, dass ein einziger Wälzkörper als elektrischer Sensor ausgebildet ist, oder dass eine Mehrzahl der Wälzkörper als elektrische Sensoren ausgebildet ist oder alle Wälzkörper als elektrische Sensoren ausgebildet sind. In jedem Fall ist eine Detektion von Defekten an dem Wälzlager möglich. Gemäß vorteilhafter Weiterbildungen der Erfindung wird bezüglich der als elektrische Sensoren ausgebildeten Wälzkörper eine bewusste Unsymmetrie vorgesehen, die den Vorteil hat, dass neben der reinen Detektion eines Defekts eine Erkennung der Position des Defekts bezüglich des Umfangs des Wälzlagers möglich ist.

Gemäß einer vorteilhaften Weiterbildung der Erfindung sind mehrere Wälzkörper als elektrische Sensoren ausgebildet. Die Abstände dieser Wälzkörper voneinander in Umfangsrichtung des Wälzlagers sind ungleich. Hierdurch sind die als elektrische Sensoren ausgebildeten Wälzkörper asymmetrisch über den Umfang des Wälzlagers verteilt angeordnet. Hierbei sind nicht alle Wälzkörper als elektrische Sensoren ausgebildet.

Gemäß einer vorteilhaften Weiterbildung der Erfindung sind mehrere oder alle Wälzkörper als elektrische Sensoren ausgebildet. Hierbei weist eine Teilmenge dieser Wälzkörper eine andere elektrische Charakteristik auf als die übrigen Wälzkörper, die als elektrische Sensoren ausgebildet sind. So kann z.B. eine erste Teilmenge der Wälzkörper eine erste elektrische Charakteristik (erster Widerstand) aufweisen und eine zweite Teilmenge der Wälzkörper eine zweite, elektrische Charakteristik (zweiter Widerstand), die sich von der ersten elektrischen Charakteristik unterscheidet. Es können auch mehr als zwei Teilmengen bzw. Gruppen von Wälzkörpern mit unterschiedlichen elektrischen Charakteristika vorgesehen werden.

Gemäß einer vorteilhaften Weiterbildung der Erfindung sind die mit gleicher elektrischer Charakteristik ausgebildeten Wälzkörper asymmetrisch über den Umfang des Wälzlagers verteilt angeordnet.

Gemäß einer vorteilhaften Weiterbildung der Erfindung weist der erste Lagerring und/oder der zweite Lagerring im Bereich der Abrollbahn der Wälzkörper hinsichtlich der direkt elektrisch erfassbaren Kenngröße wenigstens eine Inhomogenität auf, insbesondere wenigstens eine definierte Leitfähigkeitsänderung. Hierdurch kann ebenfalls eine definierte Referenzposition geschaffen werden, die eine Referenz für die Position der Wälzkörper bildet. Mittels der Inhomogenität ist anhand der erfassten Kenngröße eine Erkennung der Position des Defekts bezüglich des Umfangs des Wälzlagers möglich.

Die Erfindung eignet sich sowohl für Wälzlager mit einem Wälzkörperkäfig als auch für Wälzkörperkäfig-freie Wälzlager. Gemäß einer vorteilhaften Weiterbildung der Erfindung weist das Wälzlager einen Wälzkörperkäfig auf, der zur Abstandshaltung der Wälzkörper voneinander vorgesehen ist. Hierbei ist der Wälzkörperkäfig aus einem isolierenden Material hergestellt oder damit beschichtet. Hierdurch kann ebenfalls die Erfassungsgenauigkeit der elektrisch erfassbaren Kenngröße verbessert werden. Insbesondere werden unerwünschte Einflüsse durch Ausgleichsströme zwischen Wälzkörpern vermieden. Der Wälzkörperkäfig kann z.B. aus Keramik oder einem Kunststoff, z.B. Teflon oder Nylon, hergestellt sein. Übliche Walzkörperkäfige bestehen bereits zum Teil aus faserverstärktem Kunststoff.

Gemäß einer vorteilhaften Weiterbildung der Erfindung ist der Wälzkörper aus oder unter Verwendung von drucksensitiven Partikeln, die selbst eine direkt elektrisch erfassbare Kenngröße in Abhängigkeit von einer auf sie ausgeübten Kraft ändern, hergestellt. Vorteilhaft ist es insbesondere, den Wälzkörper ausschließlich aus den druckempfindlichen Partikeln herzustellen, wobei ggf. ein Bindemittel-Anteil vorgesehen sein kann. Gemäß einer weiteren vorteilhaften Weiterbildung der Erfindung ist der Wälzkörper aus einer Mischung der drucksensitiven Partikel und von Metallpartikeln hergestellt. Auch hier kann zusätzlich ein Bindemittel vorgesehen sein. Hierbei kann der Wälzkörper insbesondere durch einen Sinterprozess hergestellt werden. Die Metallpartikel können z. B. aus einem Sintermetall bestehen. Hiermit kann ein Wälzkörper geschaffen werden, bei dem der Strom auch maßgeblich durch das druckempfindliche Material fließt.

Gemäß einer vorteilhaften Weiterbildung der Erfindung weist der Wälzkörper zusätzlich ein Bindemittel auf.

Ein vorteilhaftes Herstellungsverfahren für einen Wälzkörper der zuvor beschriebenen Art kann wie folgt ausgestaltet sein:
a) Bereitstellen eines Ausgangsmaterials in Form kleiner Partikel, z. B. pulverförmig, wobei das Ausgangsmaterial wenigstens die drucksensitiven Partikel aufweist, ggf. zusätzlich Metallpartikel und ggf. zusätzlich ein Bindemittel,
b) Pressen des Ausgangsmaterials in die gewünschte Form des Wälzkörpers,
c) Erhitzen des gemäß Schritt b) erzeugten Rohlings unter gleichzeitiger Druckausübung auf den Rohling.

Im Schritt c) kann vorteilhaft eine Erhitzung auf z. B. 60 bis 70 % der Schmelztemperatur der drucksensitiven Partikel bzw. der Metallpartikel erfolgen. Sofern diese unterschiedliche Schmelztemperaturen haben, ist von der geringeren Schmelztemperatur auszugehen. Hierdurch wird ein Wälzkörper mittels eines Sinterprozesses hergestellt. Das hierbei entstehende Produkt weist eine hohe Bindung zwischen den Partikeln sowie eine große Härte auf, die für Wälzlager ausreichend ist. Gegebenenfalls ist der hergestellte Wälzkörper noch durch einen anschließenden Schleif- oder Polierprozess in eine endgültige Form zu bringen. Hierdurch wird ein drucksensitiver Wälzkörper erzeugt, der eine direkt elektrisch erfassbare Kenngröße in Abhängigkeit von einer auf den Wälzkörper ausgeübten Kraft ändert. Als drucksensitive Partikel können insbesondere piezoresistive Materialien verwendet werden, z. B. die bereits zuvor erläuterten piezoresistiven Materialien der Beschichtung. Hierdurch wird ein Wälzkörper erzeugt, der seine elektrische Leitfähigkeit bzw. den elektrischen Widerstand in Abhängigkeit des auf ihn ausgeübten Drucks ändert.

Gemäß einer vorteilhaften Weiterbildung der Erfindung ist der Wälzkörper aus oder unter Verwendung von Metallpartikeln hergestellt, die eine auf einen inneren Metallkern aufgebrachte Beschichtung aus einem piezoelektrischen oder piezoresistiven Material aufweisen. Es können z. B. Metallpartikel in Kugelform verwendet werden, so dass der Wälzkörper aus einer Vielzahl von kleinen Metallkugeln mit jeweils drucksensitiver Beschichtung hergestellt wird, die dann selbst drucksensitive Partikel darstellen. Die Herstellung des Wälzkörpers kann ebenfalls nach dem zuvor erläuterten Verfahren erfolgen.

Gemäß einer vorteilhaften Weiterbildung der Erfindung weist der erste Lagerring und/oder der zweite Lagerring des Wälzlagers im Bereich der Abrollbahn der Wälzkörper wenigstens zwei über den Umfang der Abrollbahn verteilt angeordnete, gegeneinander isolierte elektrische Kontaktflächen aus elektrisch leitfähigem Material zur Kontaktierung der Wälzkörper auf. Hierdurch kann die Abrollbahn der Wälzkörper, die auch als Laufbahn bezeichnet wird, mit zwei oder mehr einzelnen, über den Umfang des Wälzlagers verteilten Kontakt-Segmenten versehen werden, die jeweils zur elektrischen Kontaktierung der Wälzkörper verwendet werden können. Die gegeneinander isolierten elektrischen Kontaktflächen können dabei über elektrische Leiterbahnen mit einer Überwachungseinrichtung oder Auswerteeinrichtung zur Erfassung elektrischer Kenngrößen des Wälzlagers verbunden werden. So ist es z. B. möglich, die Abrollbahn über den Umfang mit zwei gegeneinander isolierten elektrischen Kontaktflächen zu versehen, die jeweils etwa 180 Grad umspannen, z. B. am zweiten Lagerring. Dies erlaubt eine Erfassung der direkt elektrisch erfassbaren Kenngröße des Wälzlagers durch elektrische Kontaktierung nur eines Lagerrings, im genannten Beispiel des zweiten Lagerrings. Alternativ kann auch der erste Lagerring verwendet werden. Vorteilhaft wird derjenige Lagerring mit den gegeneinander isolierten elektrischen Kontaktflächen versehen, der sich im konkreten Anwendungsfall des Wälzlagers nicht dreht. Auf diese Weise kann eine robuste und sichere elektrische Kontaktierung ohne Schleifkontakte und damit ohne nennenswerte Übergangswiderstände realisiert werden.

Ebenso kann die Abrollbahn mit mehr als zwei elektrisch gegeneinander isolierten Kontaktflächen versehen werden, z. B. mit einer Vielzahl relativ kleiner Segmente, die jeweils separat über elektrische Leitungen mit einer Auswerte- oder Überwachungseinrichtung verbunden werden. Hierdurch können Stellen besonders hoher oder besonders niedriger Belastungen am Wälzlager detektiert und bezüglich ihrer Position am Umfang des Wälzlagers genauer lokalisiert werden.

Gemäß einer vorteilhaften Weiterbildung der Erfindung weist der erste Lagerring und/oder der zweite Lagerring des Wälzlagers im Bereich der Abrollbahn der Wälzkörper in Richtung der Drehachse des Wälzlagers verteilt angeordnete, gegeneinander isolierte elektrische Kontaktflächen aus elektrisch leitfähigem Material zur Kontaktierung der Wälzkörper auf. Analog zu der zuvor beschriebenen Anordnung von über den Umfang der Abrollbahn verteilten, gegeneinander isolierten elektrischen Kontaktflächen wird hiermit eine Anordnung von in Querrichtung hierzu, d. h. in Richtung der Drehachse des Wälzlagers, verteilt angeordneten, gegeneinander isolierten elektrischen Kontaktflächen vorgeschlagen. Diese können ebenfalls separat über elektrische Leitungen mit einer Auswerte- oder Überwachungseinrichtungen verbunden werden. Vorteilhaft ist auch eine Kombination aus über den Umfang der Abrollbahn und in Richtung der Drehachse des Wälzlagers verteilt angeordneten, gegeneinander isolierten elektrischen Kontaktflächen. Dies erlaubt die Erfassung weiterer beim Betrieb eines Wälzlagers relevanter Daten, wie z. B. querwirkender Lasten und von Biegemomenten.

Die elektrischen Kontaktflächen können z. B. als Metallschicht auf einer an der Oberfläche isolierten Abrollbahn aufgebracht werden, z. B. durch Aufdampfen. Die Abrollbahn kann z. B. durch Aufbringen einer Isolationsschicht auf einen ersten oder zweiten Lagerring isoliert werden. Vorteilhaft kann auch der gesamte erste oder zweite Lagerring aus einem isolierenden Material hergestellt sein, z. B. aus Keramik oder aus Kunststoff.

Die Erfindung betrifft ferner einen Wälzkörper für ein Wälzlager der zuvor beschriebenen Art. Der Wälzkörper kann z.B. als Zubehörteil oder Ersatzteil für ein solches Wälzlager bereitgestellt werden.

Die Erfindung betrifft ferner eine Einrichtung mit einem Wälzlager der zuvor beschriebenen Art und einer elektrischen Überwachungseinrichtung. Die Überwachungseinrichtung ist elektrisch mit dem Wälzlager verbunden. Die Überwachungseinrichtung ist dazu eingerichtet, die direkt elektrisch erfassbare Kenngröße der Wälzkörper bzw. des Wälzlagers zu erfassen.

Hierzu kann die Überwachungseinrichtung mit zwei oder mehreren der zuvor erläuterten, gegeneinander isolierten elektrischen Kontaktflächen des ersten oder zweiten Lagerrings verbunden werden. Ebenso ist es vorteilhaft, die Überwachungseinrichtung elektrisch mit dem zweiten Lagerring und dem ersten Lagerring des Wälzlagers zu verbinden. Die Überwachungseinrichtung ist dann dazu eingerichtet, eine elektrische Kenngröße zwischen dem zweiten Lagerring und den ersten Lagerring zu erfassen.

Auf diese Weise kann mit einfachen und kostengünstigen Mitteln eine permanente Überwachung des Wälzlagers und eine Detektion von Defekten realisiert werden. Bei Erfassung des Widerstandes kann das Wälzlager z.B. mit einer Gleichspannung oder Wechselspannung beaufschlagt werden. Für die Erfassung kann eine definierte Spannung angelegt werden und der resultierende Strom gemessen werden oder ein definierter Strom angelegt werden und die resultierende Spannung gemessen werden. Möglich ist auch die Messung von Strom und Spannung, wenn keine Konstantstrom-oder -spannungsquelle vorhanden ist.

Bei Erfassung der Kapazität oder der Induktivität wird vorteilhaft ein Wechselsignal, z.B. ein gepulstes Signal oder eine Wechselspannung, an das Wälzlager angelegt. Erfasst werden kann beispielsweise die Amplitude und/oder die Phasenlage des Wechselsignals.

Gemäß einer vorteilhaften Weiterbildung der Erfindung ist die Überwachungseinrichtung dazu eingerichtet, den zeitlichen Verlauf der erfassten elektrischen Größe auf Unregelmäßigkeiten hin auszuwerten. Bei einer Erkennung einer ein vorgegebenes Maß überschreitenden Unregelmäßigkeit gibt die Überwachungseinrichtung ein Warnsignal ab. Die Überwachung des zeitlichen Verlaufs hat in der Regel über einen längeren Zeitraum zu erfolgen, da typische Wälzlagerfehler in einem schleichenden Prozess entstehen, der erst bei einer Betrachtung der erfassten elektrischen Kenngröße über einen längeren Zeitraum sichtbar wird. So kann zur Auswertung z. B. ein Frequenzdiagramm erstellt werden. Anhand des Frequenzdiagramms kann bei einer Beobachtung über einen längeren Zeitraum, z. B. über mehrere Monate, festgestellt werden, dass die Signalamplitude bei einer bestimmten Frequenz oder einem Frequenzbereich langsam zunimmt.

Gemäß einer vorteilhaften Weiterbildung der Erfindung ist die Überwachungseinrichtung dazu eingerichtet, aus der erfassten elektrischen Kenngröße Schlupfzustände und/oder Zustände erhöhter Belastung oder Abnutzung des Wälzlagers zu bestimmen und ein solche Zustände charakterisierendes Ausgangssignal zu erzeugen. Ein Schlupfzustand liegt vor, wenn der erste Lagerring gegenüber dem zweiten Lagerring rotiert, die Wälzkörper aber nicht mit der entsprechenden Drehgeschwindigkeit mitrollen, sondern stehend oder langsamer drehend mitgeschoben werden. Hierdurch entsteht Schlupf zwischen den Wälzkörpern und dem ersten bzw. dem zweiten Lagerring. Solche Schlupfzustände treten hauptsächlich bei unbelastet laufenden Wälzlagern auf. Hierfür kann beispielsweise vorgesehen sein, dass die Überwachungseinrichtung die erfasste elektrische Kenngröße daraufhin überwacht, dass das Wälzlager im Wesentlichen unbelastet ist. Dies wird dadurch erkannt, dass die direkt elektrisch erfassbare Kenngröße über einen vorgegebenen Zeitraum einen Wert aufweist, der einer unterhalb einer vorgegebenen, unteren Schwelle liegenden Kraft, die auf das Wälzlager einwirkt, entspricht. Im Falle der Messung des ohmschen Widerstands des Wälzlagers als Kenngröße kann z.B. aufgrund des reziproken Zusammenhangs zwischen dem ohmschen Widerstand und der auf das Wälzlager einwirkenden Kraft überwacht werden, ob der gemessene ohmsche Widerstand über einen vorgegebenen Zeitraum oberhalb einer vorgegebenen Schwelle liegt. Ein Zustand erhöhter Belastung oder Abnutzung des Wälzlagers kann dann erkannt werden, wenn nach einer solchen Phase eines unbelasteten Betriebs des Wälzlagers die auf das Wälzlager einwirkende Kraft ansteigt, d.h. der ohmsche Widerstand abfällt. Dies führt nämlich dazu, dass die Wälzkörper aus einem stehenden oder langsam drehenden Zustand, der sich bei unbelastet drehendem Wälzlager aufgrund des Lagerspiels einstellt, plötzlich in einen schnell drehenden Zustand übergehen. Dies führt mit der Zeit zu Abnutzung und zu Defekten an dem Wälzlager. Das vorgeschlagene, solche Zustände charakterisierende Ausgangsignal kann solche Fälle anzeigen. Über das Ausgangssignal kann z. B. eine Anzeigeeinrichtung, z. B. eine Warnlampe, angesteuert werden. Eine weitere Anwendungsmöglichkeit besteht darin, die Zustände erhöhter Belastung oder Abnutzung des Wälzlagers zeitlich zu summieren, z.B. durch zeitliche Integralbildung des Ausgangssignals, und hieraus eine Anzeige eines Wartungs- oder Reparaturbedarfs für das Wälzlager zu erzeugen.

Gemäß einer vorteilhaften Weiterbildung der Erfindung kann das zuvor erwähnte Ausgangssignal als Steuersignal verwendet werden, um Zuständen erhöhter Belastung oder Abnutzung des Wälzlagers entgegenzuwirken. Gemäß einer vorteilhaften Weiterbildung der Erfindung ist eine Steuereinrichtung vorgesehen, die dazu eingerichtet ist, das Steuersignal zu empfangen und bei erkanntem Schlupfzustand und/oder bei erkannter erhöhter Belastung oder Abnutzung des Wälzlagers die aktuelle oder eine durch den Schlupfzustand bevorstehende Belastung oder Abnutzung des Wälzlagers zu vermindern oder zu vermeiden. Sofern einer aktuellen Belastung oder Abnutzung entgegengewirkt wird, kann dies unmittelbar erfolgen. Im Falle einer durch den Schlupfzustand bevorstehenden Belastung oder Abnutzung des Wälzlagers ist es vorteilhaft, nach Erkennung des Schlupfzustands zu überwachen, wenn das Wälzlager wieder belastet werden soll und damit die Wälzkörper den Schlupfzustand verlassen und plötzlich wieder anlaufen. Bei Erkennung dieses Zustands kann z. B. ein schonendes Verfahren wie eine Herabsetzung der Drehzahl des Wälzlagers genutzt werden, bevor das Wälzlager unter Belastung gesetzt wird. Dies kann gemäß einer vorteilhaften Weiterbildung der Erfindung dadurch erfolgen, dass die Steuereinrichtung dazu eingerichtet ist, die auf das Wälzlager einwirkende Drehgeschwindigkeit zumindest zeitweise zu reduzieren und/oder nur langsam zu erhöhen. Ebenso kann vorgesehen sein, eine detektierte Belastung des Wälzlagers nur langsam zu erhöhen. Diese Maßnahmen wirken sich Wälzlager-schonend aus, so dass die Lebensdauer des Wälzlagers erhöht wird. Hierbei kann insbesondere ein vorgegebener zeitlicher Gradient für die langsame Erhöhung festgelegt sein.

Gemäß einer vorteilhaften Weiterbildung der Erfindung ist die Überwachungseinrichtung dazu eingerichtet, aus der erfassten elektrischen Kenngröße ein aktuelles Belastungsmaximum und/oder Belastungsminimum des Wälzlagers entlang der Abrollbahn der Wälzkörper über den Umfang des Wälzlagers und/oder in Richtung der Drehachse des Wälzlagers örtlich zu bestimmen. Dies kann z. B. durch Auswertung elektrischer Signale an verschiedenen elektrischen Kontaktflächen, die in der Abrollbahn angeordnet sind, erfolgen. Durch die Bestimmung und örtliche Lokalisierung eines Belastungsmaximums bzw. eines Belastungsminimums können bessere Vorhersagen über mögliche Fehlbelastungen des Wälzlagers und zukünftige Defekte getroffen werden. Insbesondere wird es möglich, die Ursachen solcher Fehlbelastungen frühzeitig zu erkennen und diesen entgegenzuwirken.

Gemäß einer vorteilhaften Weiterbildung der Erfindung ist die Überwachungseinrichtung dazu eingerichtet, aus der erfassten elektrischen Kenngröße eine Radialkraft, eine Axialkraft und/oder ein Biegemoment, das auf das Wälzlager einwirkt, und/oder die Wirkrichtung des Biegemoments zu bestimmen. Die Bestimmung dieser Größen erfolgt indirekt, indem zunächst eine örtliche Druckverteilung der Wälzkörper auf die Lagerringe errechnet wird und daraus die zuvor genannten Größen bestimmt werden. Als Axialkraft wird eine Kraftkomponente verstanden, die in Längsrichtung der Drehachse des Wälzlagers auf das Wälzlager einwirkt. Als Biegemoment wird eine solche Belastung verstanden, die auf Grund einer äußeren Krafteinwirkung zu einer Biegebelastung z.B. auf eine durch das Wälzlager gehende Welle führt. Dieses Biegemoment hat das Bestreben, die Rotationsachse des Wälzlagers zu verändern. Als Radialkraft wird eine Kraftkomponente verstanden, die in radialer Richtung, d. h. senkrecht zur Drehachse des Wälzlagers, auf das Wälzlager direkt oder über ein mit dem Wälzlager verbundenes Bauteil auf das Wälzlager ausgeübt wird.

Gemäß einer vorteilhaften Weiterbildung der Erfindung ist die Überwachungseinrichtung elektrisch nur mit dem zweiten Lagerring oder nur mit dem ersten Lagerring des Wälzlagers verbunden. Die Überwachungseinrichtung ist dazu eingerichtet, eine elektrische Kenngröße zwischen wenigstens zwei gegeneinander elektrisch isolierten Kontaktflächen des zweiten Lagerrings oder des ersten Lagerrings zu erfassen. Gemäß einer vorteilhaften Weiterbildung der Erfindung sind die wenigstens zwei gegeneinander elektrisch isolierten Kontaktflächen in der Abrollbahn der Wälzkörper in dem ersten Lagerring oder dem zweiten Lagerring angeordnet. Gemäß einer vorteilhaften Weiterbildung der Erfindung ist derjenige Lagerring, mit dem die Überwachungseinrichtung elektrisch verbunden, als statischer Lagerring ausgebildet ist, der sich während des Betriebs des Wälzlagers nicht dreht.

Die Erfindung betrifft ferner vorteilhafte Verfahren zur Überwachung der direkt elektrisch erfassbaren Kenngröße eines rotierbaren Wälzlagers der zuvor beschriebenen Art. Gemäß einer ersten Ausführungsform wird in einem Verfahren der zeitliche Verlauf der erfassten elektrischen Kenngrößen auf Unregelmäßigkeiten hin ausgewertet und bei Erkennung einer ein vorgegebenes Maß überschreitenden Unregelmäßigkeit ein Warnsignal abgegeben.

In einer weiteren Ausführungsform des Verfahrens werden aus der erfassten elektrischen Kenngröße Zustände erhöhter Belastung oder Abnutzung des Wälzlagers bestimmt und ein solche Zustände charakterisierendes Ausgangssignal erzeugt.

In einer weiteren Ausführungsform des Verfahrens wird das solche Zustände charakterisierende Ausgangssignal als Steuersignal verwendet, um mittels einer Steuereinrichtung bei erkannter erhöhter Belastung oder Abnutzung des Wälzlagers die Belastung oder Abnutzung des Wälzlagers zu vermindern oder zu vermeiden. In einer weiteren Ausführungsform des Verfahrens ist vorgesehen, zur Vermeidung oder Verminderung der erhöhten Belastung oder Abnutzung die auf das Wälzlager einwirkende Drehgeschwindigkeit zumindest zeitweise zu reduzieren und/oder nur langsam zu erhöhen und/oder eine detektierte Belastung des Wälzlagers nur langsam zu erhöhen.

In einer weiteren Ausführungsform des Verfahrens wird aus der erfassten elektrischen Kenngröße ein aktuelles Belastungsmaximum und/oder ein Belastungsminimum des Wälzlagers entlang der Abrollbahn der Wälzkörper über den Umfang des Wälzlagers und/oder in Richtung der Längsachse des Wälzlagers örtlich bestimmt.

In einer weiteren Ausführungsform des Verfahrens wird aus der elektrischen Kenngröße eine Radialkraft, eine Axialkraft und/oder ein Biegemoment, das auf das Wälzlager einwirkt, und/oder die Wirkrichtung des Biegemomentes bestimmt.

Die Erfindung wird nachfolgend anhand von Ausführungsbeispielen unter Verwendung von Zeichnungen näher erläutert.

Es zeigen
- Figur 1 -: ein Wälzlager und
- Figur 2 -: einen Wälzkörper und
- Figur 3 -: eine elektrische Repräsentation des Wälzlagers und
- Figur 4 -: ein Wälzlager mit einer Überwachungseinrichtung und
- Figur 5 -: den Verlauf einer Kenngröße in einem Zeitdiagramm und
- Figur 6 -: den Verlauf einer Kenngröße in einem Frequenzdiagramm und
- Figur 7 -: eine weitere Ausführungsform eines Wälzlagers mit einer Überwachungseinrichtung und
- Figuren 8 und 9 -: ein Wälzlager mit Lagerspiel und
- Figur 10 -: eine Widerstands/Kraft-Kennlinie eines Wälzlagers und
- Figur 11 -: eine weitere Ausführungsform eines Wälzlagers mit einer Überwachungseinrichtung und
- Figuren 12 und 13 -: eine ausschnittsweise Darstellung der Abrollbahn der Wälz-körper in einem Wälzlager und
- Figur 14 -: eine weitere Ausführungsform eines Wälzlagers mit einer Überwachungseinrichtung und
- Figur 15 -: eine Darstellung der an einem Wälzlager angreifenden Kräfte und Momente und
- Figur 16 -: eine Anwendung eines Wälzlagers in einer Windkraft-Energiererzeugungsanlage und
- Figur 17 -: ein weiteres Wälzlager.

In den Figuren werden gleiche Bezugszeichen für einander entsprechende Elemente verwendet.

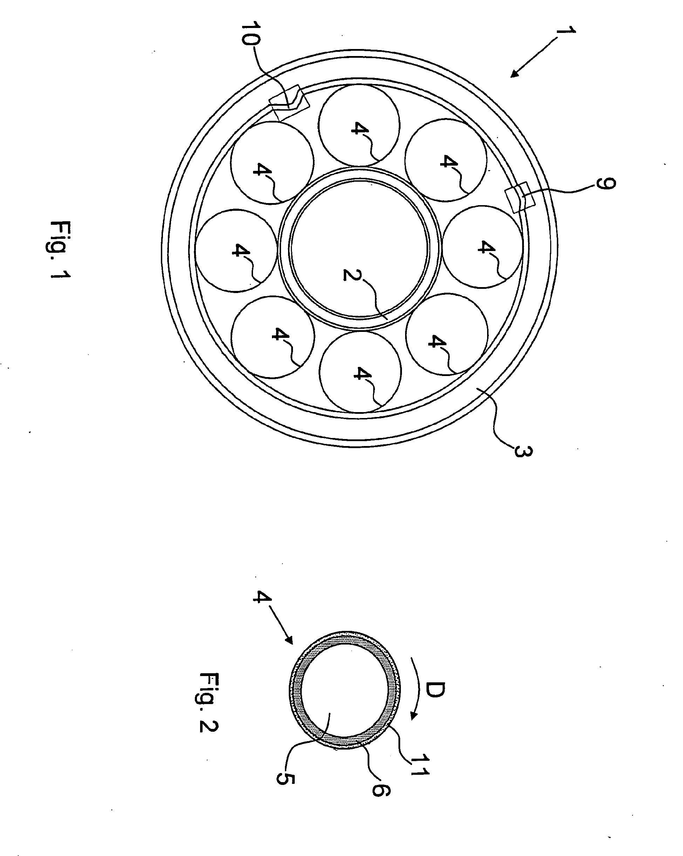

Die Figur 1 zeigt ein Wälzlager 1 in Form eines Radiallagers, mit einem als inneren Lagerring ausgebildeten ersten Lagerring 2, einem als äußeren Lagerring ausgebildeten zweiten Lagerring 3 und einer Mehrzahl von Wälzkörpern 4, die zwischen dem inneren Lagerring 2 und dem äußeren Lagerring 3 angeordnet sind. Beispielhaft ist eine Anzahl von acht Wälzkörpern dargestellt. Der äußere Lagerring 3 ist gegenüber dem inneren Lagerring 2 verdrehbar. Bei einer Verdrehung des äußeren Lagerrings 3 gegenüber dem inneren Lagerring 2 werden die Wälzkörper 4 in Drehung versetzt und rollen über den inneren Lagerring 2 und den äußeren Lagerring 3 ab.

In der Figur 1 sind beispielhaft noch zwei Defekte 9, 10 in Form von Pittings an dem äußeren Lagerring 3 dargestellt. Zur deutlicheren Erkennbarkeit sind die Defekte 9, 10 übertrieben groß dargestellt; in der Realität sind solche Defekte wesentlich kleiner und häufig mit dem bloßen Auge schwer erkennbar.

Die Figur 2 zeigt beispielhaft einen Wälzkörper 4, der einen Kern 5 aus hartem Material, z.B. Stahl oder Keramik, aufweist. Auf dem Kern 5 ist eine piezoresistive Beschichtung 6 aufgebracht. Auf der piezoresistiven Beschichtung 6 ist eine Verschleißschutzschicht 11 aufgebracht. In der Figur 2 sind die Beschichtung 6 und die Verschleißschutzschicht 11 in Schnittdarstellung wiedergegeben. Die Beschichtung 6 und die Verschleißschutzschicht 11 überdecken zumindest die Bereiche des Wälzkörpers 4, die im Betrieb des Wälzlagers 1 mit dem inneren Lagerring 2 und dem äußeren Lagerring 3 in Berührung kommen können. Die Dicke der zwei Schichten 6, 11 ist zur Verdeutlichung wesentlich vergrößert dargestellt.

Durch einen Pfeil D ist beispielhaft die Drehrichtung des Wälzkörpers 4 dargestellt.

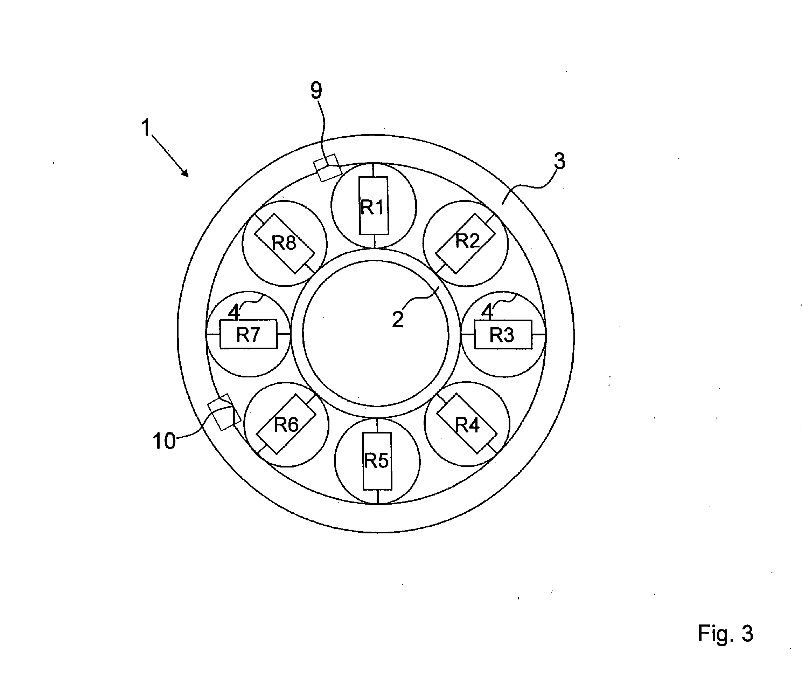

Die Figur 3 zeigt das Wälzlager 1 gemäß Figur 1 in schematisierter Darstellung, wobei die Wälzkörper 4 hinsichtlich ihrer elektrischen Eigenschaften durch ein elektrisches Bauteil, hier beispielhaft einen Widerstand, charakterisiert sind. Die Widerstände der acht Wälzkörper 4 sind bezeichnet als R1 bis R8. Es sei beispielhaft angenommen, dass alle Wälzkörper 4 mit der piezoresistiven Beschichtung 6 und ggf. der Verschleißschutzschicht 11 versehen sind. Hierbei sei ferner angenommen, dass sieben der Wälzkörper 4 mit der piezoresistiven Beschichtung derart versehen sind, dass sie im druckunbelasteten Fall jeweils den gleichen Widerstand R haben. Bezüglich des Wälzkörpers R8 sei angenommen, dass dieser derart beschichtet ist, dass sich ein anderer Widerstand im druckunbelasteten Fall ergibt, z.B. 2R. Allgemein gesagt ist der der Wälzkörper R8 derart beschichtet, dass ein anderes Verhältnis zwischen Druck und Widerstand besteht als bei den übrigen Wälzkörpern. Hierdurch bildet der Widerstand R8 eine Referenzgröße, auf die bei einer Auswertung der Signale der Sensoren bezüglich der anderen Wälzkörper Bezug genommen werden kann.

Wie erkennbar ist, ist jeder Wälzkörper 4 wie bei Wälzlagern üblich zwischen dem äußeren und dem inneren Lagerring eingebettet. Der äußere und der innere Lagerring sind elektrisch gut leitend. An den Stellen, an denen die Wälzkörper an den Lagerringen aufliegen, besteht ein mechanischer und elektrischer Kontakt zwischen dem Wälzkörper und dem jeweiligen Lagerring. Durch die Einbettung herrscht eine mechanische Kraft in den Kontaktstellen des Wälzkörpers zum äußeren und inneren Lagerring. Die mechanische Kraft wirkt lokal auf die kraft- bzw. druckempfindliche piezoresistive Beschichtung des Wälzkörpers. Als Folge dieser Kraft bzw. dieses Drucks ändert sich der Widerstand lokal in der Beschichtung im Bereich der Druckstelle und von der Druckstelle bis zum Wälzkörperkern 5. Der Wälzkörperkern 5 ist elektrisch gut leitend, so dass eine niederohmige Verbindung von der Unterseite der Beschichtung einer Druckstelle zur Unterseite der Beschichtung der Druckstelle auf der anderen Seite des Wälzkörpers besteht. Der Wälzkörper ist hierdurch als Sensor ausgebildet, bei dem sich der Widerstand von der einen Druckstelle zur anderen Druckstelle in Abhängigkeit der mechanischen Belastung des Wälzkörpers ändert.

Es ist auch möglich, einen nicht leitenden Wälzkörperkern 5 zu verwenden. Dann bildet sich die elektrische Verbindung ausschließlich durch Leitung in der druckempfindlichen Schicht 6.

Rollt nun ein Wälzkörper über einen Defekt 9, 10, dann ändert sich die mechanische Belastung, d.h. der Druck auf den Wälzkörper steigt an. Hierdurch ändert sich auch der Widerstandswert des Wälzkörpers und damit auch der Widerstandswert zwischen dem inneren Lagerring 2 und dem äußeren Lagerring 3. Diese Widerstandsvariation kann als direkt elektrisch erfassbare Kenngröße gemessen werden.

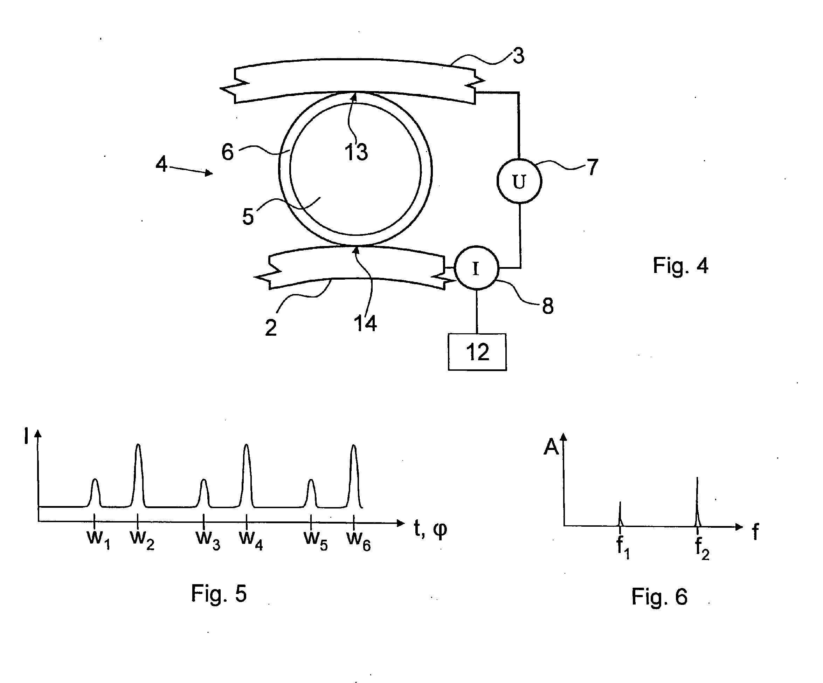

Die Figur 4 zeigt einen Schnitt durch das Wälzlager 1 in Umfangsrichtung, d.h. in Laufrichtung des hier als Kugel ausgebildeten Wälzkörpers 4. Wie erkennbar ist, ist die Kugel 4 zwischen dem äußeren Lagerring 3 und dem inneren Lagerring 2 eingespannt. Hierdurch ergeben sich eine Druckstelle 13 zwischen dem äußeren Lagerring 3 und der Kugel 4 und eine Druckstelle 14 zwischen dem inneren Lagerring 2 und der Kugel 4. An das Wälzlager ist gemäß Figur 4 eine elektrische Überwachungseinrichtung 7, 8, 12 angeschlossen. Die elektrische Überwachungseinrichtung weist eine Spannungsquelle 7 auf. Ein Pol der Spannungsquelle 7 ist über eine elektrische Leitung mit dem äußeren Lagerring 3 verbunden, der andere Pol ist über eine elektrische Leitung und einen in dieser elektrischen Leitung angeordneten Stromsensor 8 mit dem inneren Lagerring 2 verbunden. Der Stromsensor 8 kann beispielsweise als Mess-Shunt ausgebildet sein. Der Stromsensor 8 ist mit einer elektronischen Erfassungs- und Auswerteeinrichtung 12 verbunden, z.B. einem Oszilloskop, einem Transientenrecorder oder einer anderen digitalen Signalverarbeitungseinrichtung.

Wie schon erwähnt, kann auch eine Stromquelle verwendet werden und stattdessen die Spannung erfasst werden.

Die Figur 5 zeigt beispielhaft ein von der Auswerteeinrichtung 12 aufgenommenes Stromsignal, das über die Zeit t dargestellt ist. Vorteilhaft kann die Darstellung gemäß Figur 5 auch eine Darstellung des Stromsignals I über eine in Umfangsrichtung des Wälzlagers laufende Winkelkoordinate ϕ sein. Die Auswerteeinrichtung 12 kann zur Darstellung des Stromsignals I in beiden Alternativen ausgebildet sein. Vorteilhaft bestimmt die Auswerteeinrichtung 12 das Stromsignal I über die Winkelkoordinate ϕ unter Berücksichtung eines Drehzahlsignals oder eines Winkelsignals, das der Auswerteeinrichtung 12 zugeführt wird. Insbesondere in der Darstellung des Stromsignals über die Winkelkoordinate ϕ erlaubt eine einfache Detektion der Position des Defekts 9, 10.

Zur Vereinfachung der Darstellung sei für das Stromsignal I gemäß Figur 5 angenommen, dass das Wälzlager weise nur einen Defekt auf, und zwar den Defekt 9. Beim Überrollen am Defekt 10 oder Defekt 9 werden die Kugeln 4 entweder stärker oder weniger geklemmt. Dadurch ändert sich der Druck an den Kontaktstellen zwischen Kugeln und Lagerringen. Somit ändert sich der Widerstand einer Kugel, wenn sie über einen Defekt rollt. Weiterhin sei angenommen, dass nur die Wälzkörper mit den Widerstandswerten R1 und R6 als elektrische Sensoren ausgebildet sind, und die übrigen Wälzkörper elektrisch neutral sind, d.h. in diesem Fall isoliert sind. Ferner sei angenommen, dass R1 den Wert R hat, und R6 den Wert 2R. Hierdurch ergeben sich, wie in der Figur 5 erkennbar, bei jeder Umdrehung des Wälzlagers zwei Änderungen im Stromsignal I mit unterschiedlicher Amplitude. Die Änderungen an den Positionen w₁, w₃ und w₅ entsprechen dem Fall, dass der Wälzkörper mit dem Widerstandswert R1 über den Defekt 10 rollt. Die Änderungen des Stromsignals I mit den Positionen w₂, w₄ und w₆ entsprechen dem Fall, dass der Wälzkörper mit dem Widerstandswert R6 über den Defekt 10 rollt.

Vorteilhaft ist auch eine Auswertung der direkt elektrisch erfassbaren Kenngröße, d.h. des Stromsignals I, im Frequenzbereich. Hierzu wird die erfasste Kenngröße aus dem Zeitbereich in den Frequenzbereich transformiert, z.B. mittels Fourier-Transformation. Die Figur 6 zeigt beispielhaft eine Darstellung des entstehenden Ausgangssignals A im Frequenzbereich. Erkennbar sind bei Annahme des gleichen Beispiels wie Figur 5 zwei charakteristische Frequenzanteile bei den Frequenzen f₁ und f₂.

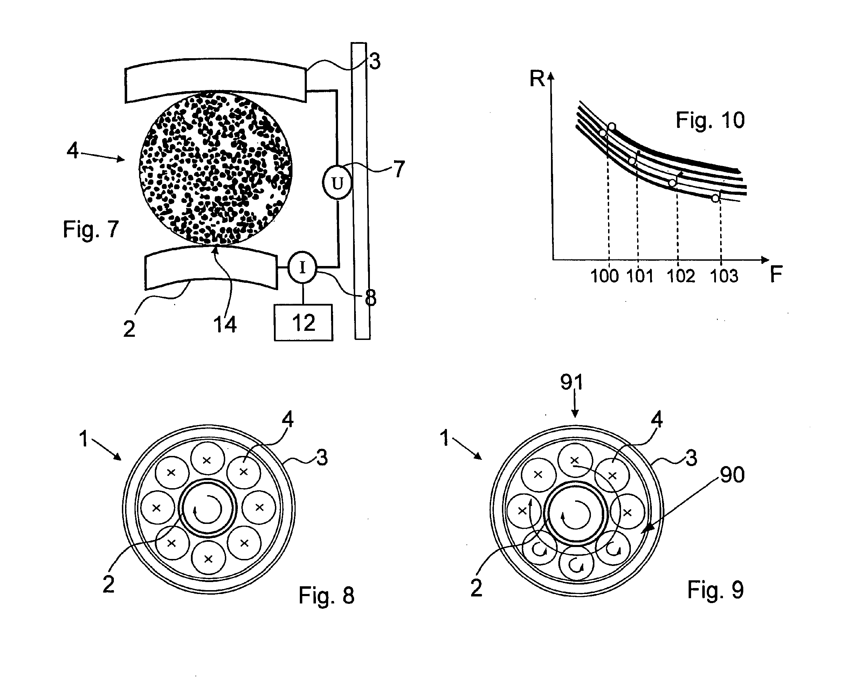

Die Figur 7 zeigt eine vergleichbare Anordnung wie die Figur 4. Im Gegensatz zur Figur 4 ist bei der Ausführungsform gemäß Figur 7 ein kugelförmiger Wälzkörper 4 dargestellt, der unter Verwendung von drucksensitiven Partikeln, die als schwarze Punkte dargestellt sind, in einem Sinterprozess hergestellt wurde. Die weiß dargestellten Zonen des Wälzkörpers 4 sind Metallpartikel, wobei zusätzlich ein Bindemittel zugemischt ist. Der Wälzkörper 4 kann z. B. nach dem eingangs beschriebenen Verfahren hergestellt werden. Hierdurch wird sozusagen der gesamte Wälzkörper 4 drucksensitiv, in der Art, dass sich der gesamte elektrische Widerstand des Wälzkörpers 4 in Abhängigkeit von einer auf den Wälzkörper 4 ausgeübten Kraft ändert. Als drucksensitives Material können die eingangs erwähnten piezoresistiven Materialien, d. h. dotierter oder undotierter Kohlenwasserstoff oder reiner Kohlenstoff, verwendet werden. Die Größe der einzelnen Partikel ist in der Figur 7 zur Veranschaulichung deutlich vergrößert wiedergegeben als in der Realität.

Nachfolgend wird auf die zuvor bereits angesprochenen Aspekte der Erfindung eingegangen, die sich aus einem bei Wälzlagern in der Praxis immer auftretenden Schlupf zwischen den Wälzkörpern und dem inneren bzw. dem äußeren Lagerring ergeben. In diesem Zusammenhang wird zunächst Bezug auf die Figuren 8 und 9 genommen. Die Wälzkörper werden in Wälzlagern typischerweise mit einem leichten Untermaß bezüglich des Abstands zwischen dem inneren und dem äußeren Lagerring dimensioniert, wie in Figur 8 prinzipiell dargestellt. Das Untermaß ist hierbei zur Veranschaulichung deutlich vergrößert wiedergegeben als in der Realität. Das Untermaß erlaubt den Wälzkörpern eine gewisse Wärmeausdehnung, ohne dass diese klemmen. Das Untermaß hat aber auch zur Folge, dass ein gewisser Schlupf auftritt.

Eine erste Art des Schlupfs tritt auf, wenn das Wälzlager unbelastet rotiert. In diesem Fall wird keine oder nur wenig Kraft auf die Wälzkörper ausgeübt. Dies führt dazu, dass die Wälzkörper trotz rotierendem inneren oder äußeren Lagerring zumindest zum Teil stehen bleiben und nicht mitrollen. Wird nun eine Belastung auf das Wälzlager ausgeübt, erfolgt eine abrupte Beschleunigung der Wälzkörper, ähnlich wie bei den Rädern eines landenden Flugzeugs. Dies führt mit der Zeit zu einer Abnutzung der Wälzkörper bzw. des inneren oder des äußeren Lagerrings und damit zu Defekten an dem Wälzlager. Gemäß Figur 8 wird davon ausgegangen, dass der innere Lagerring 2 dreht, aber zumindest einige Wälzkörper 4 stehen.

Eine zweite Art des Schlupfs entsteht, wenn das Wälzlager in einer Richtung belastet ist. Dies ist in der Figur 9 beispielhaft dargestellt, in der der wie bei der Figur 8 drehende innere Lagerring 2 etwas exzentrisch bezüglich des äußeren Lagerrings 3 dargestellt ist. Die exzentrische Position des inneren Lagerrings entsteht durch eine in Richtung des Pfeils 91 wirkende Belastung auf den inneren Lagerring 2, z. B. durch eine durch den inneren Lagerring 2 geführte drehende Welle. Diese einseitige Belastung führt dazu, dass nur diejenigen Wälzkörper, die gerade eine Belastung tragen, eine Rollbewegung ausführen. Dies ist in der Figur 9 anhand der unteren drei Wälzkörper 4 dargestellt, die mit einem runden Pfeil gekennzeichnet sind. Die übrigen fünf Wälzkörper, die mit einem "x" gekennzeichnet sind, sind außerhalb des Belastungsbereichs. Diese außerhalb des Belastungsbereichs befindlichen Wälzkörper werden während der Drehung des inneren Lagerrings 2 lediglich mitgeschoben, ohne selbst zu rollen. Wie erkennbar ist, werden in einem solchen Belastungsfall die Wälzkörper 4 regelmäßig zum Mitrollen beschleunigt, um danach, wenn sie die Belastungszone verlassen, wiederum stehenzubleiben und weitergeschoben zu werden. Durch den Pfeil 90 ist in der Figur 9 dargestellt, an welcher Stelle die Wälzkörper 4 in die Belastungszone eintreten und damit in die Drehbewegung übergehen. Durch das regelmäßige Anlaufen und Stehenbleiben der Wälzkörper entsteht eine erhöhte Abnutzung, die die Lebensdauer des Wälzlagers verkürzt.

Beide Zustände einer bevorstehenden Abnutzung infolge einer Erhöhung der Belastung des Wälzlagers 1, wie anhand der Figuren 8 und 9 beschrieben, können mit einem Wälzlager mit den drucksensitiven Wälzkörpern 4 erkannt werden, und es können entsprechende Gegenmaßnahmen getroffen werden.

Durch eine Zunahme der Belastung des Wälzlagers ändert sich der durch die Überwachungseinrichtung 12 erfassbare Widerstand des Wälzlagers auf Grund zweier Effekte. Zunächst ändert sich der Widerstand auf Grund der Drucksensitivität der einzelnen Wälzkörper, und zwar in etwa umgekehrt proportional zur auftretenden Kraft. Zusätzlich wird durch eine einseitig auf das Wälzlager ausgeübte Kraft der elektrische Kontakt zwischen den Wälzkörpern und dem inneren bzw. dem äußeren Lagerring verändert. Durch zunehmende Kraft wird der Kontakt verbessert bzw. der Übergangswiderstand reduziert. Zusätzlich entsteht eine Art Parallelschaltungs-Effekt der Widerstände der einzelnen Wälzkörper, wie z. B. anhand der Figur 9 erkennbar ist. Dort sind die drei unteren, drehenden Wälzkörper praktisch frei von Übergangswiderständen parallel geschaltet, während die übrigen Wälzkörper auf Grund ihres größeren Abstands zu den Lagerringen größere Übergangswiderstände aufweisen. Mit zunehmender Last auf das Wälzlager vergrößert sich auch die Widerstandsreduzierung in Folge der Parallelschaltung der Wälzkörper.

Die Figur 10 zeigt in qualitativer Darstellung einen typischen Verlauf des durch die Überwachungseinrichtung 12 messbaren Widerstands R in Abhängigkeit der auf das Wälzlager in Richtung des Pfeils 91 ausgeübten Kraft F. Charakteristisch ist eine Art Treppenkurve, wobei die einzelnen Kurvenstücke hyperbelartig verlaufen. Der hyperbelartige Verlauf entspricht der Reziprozität zwischen dem Widerstand R und der Kraft F. Die zusätzlich an den Stellen 100, 101, 102 und 103 auftretenden sprungartigen Veränderungen des Widerstands R resultieren daraus, dass ein zusätzlicher Wälzkörper zur Parallelschaltung anderer Wälzkörper hinzu kommt, weil dieser durch den Anstieg der Kraft F praktisch widerstandsfrei zwischen dem inneren und dem äußeren Lagerring eingepresst ist.

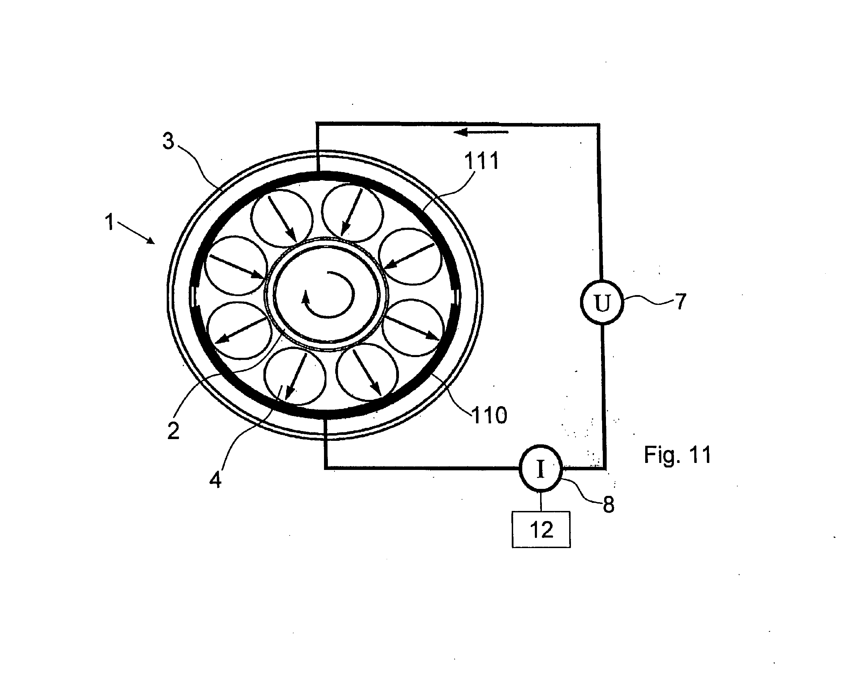

Die Figur 11 zeigt eine Ausführungsform des Wälzlagers 1, bei der äußere Lagerring 3 zwei sich jeweils um nahezu 180° über den Umfang des äußeren Lagerrings erstreckende elektrische Kontaktflächen 110, 111 aufweist. Die elektrischen Kontaktflächen 110, 111 sind gegeneinander isoliert und im Bereich der Abrollbahn der Wälzkörper 4 angeordnet, derart, dass die Wälzkörper 4 über die elektrischen Kontaktflächen 110, 111 rollen. Die elektrische Überwachungseinrichtung 7, 8, 12 ist über jeweils eine elektrische Leitung mit jeder der elektrischen Kontaktflächen 110, 111 verbunden. Angenommen sei, dass sich der innere Lagerring 2 dreht und der äußere Lagerring 3 steht. Hierdurch kann eine Messung des elektrischen Widerstands des Wälzlagers 1 ohne eine Verbindung zum drehenden inneren Lagerring 2 erfolgen. Daher sind keine Schleifkontakte erforderlich.

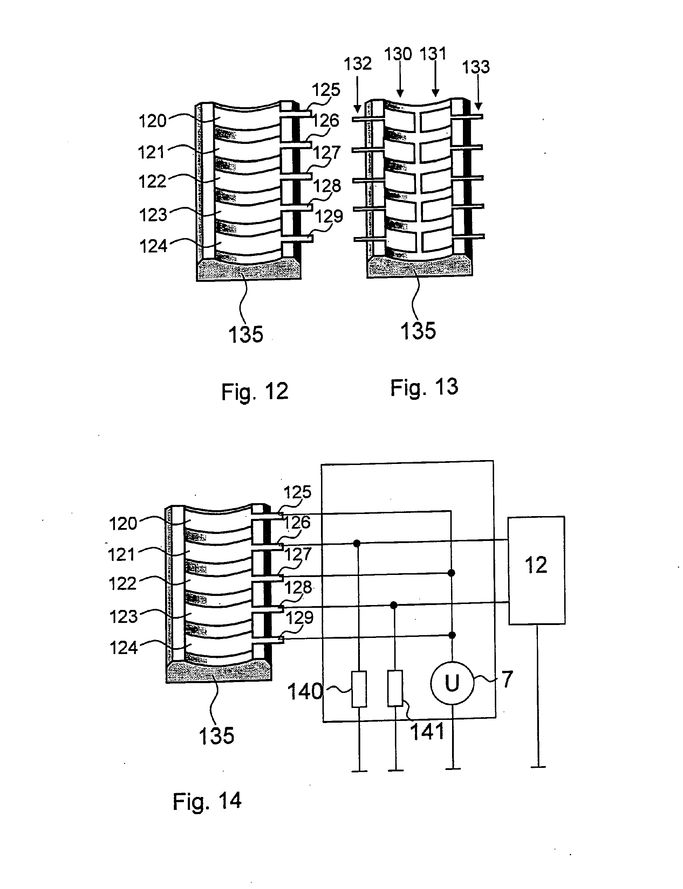

Es können auch mehr elektrische Kontaktflächen als die in Figur 11 dargestellten zwei Kontaktflächen vorgesehen sein. Vorteilhaft ist insbesondere die Anordnung einer Vielzahl kleiner elektrischer Kontaktflächen, wie z. B. anhand der Figuren 12 und 13 dargestellt. Gemäß Figur 12 ist eine Vielzahl von elektrischen Kontaktflächen 120 bis 124 vorgesehen, die z. B. in der Abrollbahn 135 des äußeren Lagerrings 3 angeordnet sind. Jede Kontaktfläche 120 bis 124 ist über eine elektrische Anschlussleitung 125 bis 129 mit der Überwachungseinrichtung 12 verbunden. Beispielsweise kann jede zweite elektrische Anschlussleitung mit der Spannungsquelle 7 und die verbleibenden elektrischen Anschlussleitungen mit jeweils einzelnen Messwiderständen verbunden sein, wie in der Figur 14 beispielhaft mit nur zwei Messwiderständen 140, 141 dargestellt. Die an den Messwiderständen 140, 141 abfallenden Spannungen können dann von der Überwachungseinrichtung 12 erfasst werden, z. B. über eine Vielzahl von Analog/Digital-Wandlereingängen oder einen Analog-Multiplexer. Auf diese Weise können die Stellen erhöhter Belastung über den Umfang des Wälzlagers bestimmt werden.

Die Figur 13 zeigt eine vergleichbare Anordnung von elektrischen Kontaktflächen wie die Figur 12, wobei die elektrischen Kontaktflächen nur etwa bis zur Mitte der Abrollbahn 135 der Wälzkörper reichen und dazwischen aufgetrennt sind. Es ergeben sich hierdurch zwei Reihen von Kontaktflächen, nämlich eine linke Reihe 130 und eine rechte Reihe 131. Jede einzelne Kontaktfläche ist über eine eigene elektrische Anschlussleitung mit der Überwachungseinrichtung 12 verbunden, z. B. in der gleichen Weise wie zuvor für die Ausführungsform gemäß Figur 12 beschrieben. Die Vielzahl der elektrischen Anschlussleitungen ist in der Figur 13 in Form einer linken Reihe 132 und einer rechten Reihe 133 von Anschlussleitungen dargestellt. Mit der Ausführungsform gemäß Figur 13 ist eine erweiterte Lokalisierung von Belastungsminima und-maxima bezüglich des Wälzlagers möglich, und zwar nicht nur bezüglich des Umfangs, sondern auch hinsichtlich der Lage in axialer Richtung.

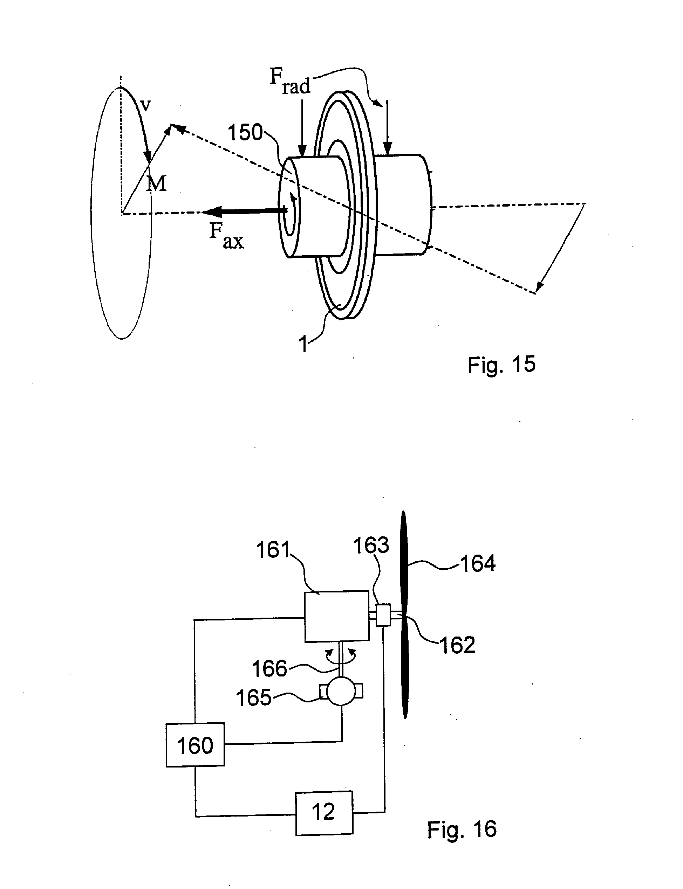

Die Ausführungsform des Wälzlagers gemäß Figur 13 erlaubt insbesondere eine Bestimmung der diversen möglichen, auf das Wälzlager 1 einwirkenden Kräfte und Momente, die in Figur 15 dargestellt sind. Die Figur 15 zeigt das Wälzlager 1 mit einer durch den inneren Lagerring 2 gehenden, drehenden Welle 150. Durch die Überwachungseinrichtung 12 kann die örtliche Druckverteilung der Wälzkörper entlang des Lagerrings benutzt werden, um einerseits die Axialkraft Fₐₓ bestimmt werden, d. h. die in Längsrichtung der Welle 140 wirkende Kraft. Zudem kann die radial wirkende Kraft F_{rad} bestimmt werden, d. h. die senkrecht zur Axialkraft Fₐₓ wirkende Kraft. Zudem ist eine Bestimmung des Biegemoments M und der Richtung des Biegemoments möglich.

Die Figur 16 zeigt eine Windkraft-Energieerzeugungsanlage, in der ein erfindungsgemäßes Wälzlager mit drucksensitiven Wälzkörpern sowie eine Überwachungseinrichtung 12 vorgesehen ist. Die Windkraft-Energieerzeugungsanlage dient zur Erzeugung elektrischer Energie durch Ausnutzung von Windkraft. Hierzu weist die Windkraft-Energieerzeugungsanlage die bei solchen Anlagen bekannten Komponenten wie einen elektrischen Generator 161 sowie eine mit einer Antriebswelle 162 des elektrischen Generators 161 verbundene Luftschraube 164 auf. Der elektrische Generator 161 ist z. B. in einem Maschinengehäuse der Windkraft-Energieerzeugungsanlage untergebracht. Der elektrische Generator 161 ist z. B. zusammen mit dem Maschinengehäuse über einen Drehantrieb verdrehbar, um eine Anpassung an sich verändernde Windrichtungen vorzunehmen. Der Drehantrieb weist einen Elektromotor 165 sowie eine mit dem elektrischen Generator 161 bzw. dem Maschinengehäuse verbundene Antriebswelle 166 auf. Vorgesehen ist ferner eine Steuereinrichtung 160 der Windkraft-Energieerzeugungsanlage, die zur Steuerung der elektrischen Energieerzeugung und der Strom-Einspeisung ins Stromnetz sowie zur Steuerung des Drehantriebs 165, 166 dient. Die Steuereinrichtung 160 sorgt beispielsweise für eine Nachführung des Maschinengehäuses bei sich ändernder Windrichtung durch Ansteuern des Elektromotors 165. Die Steuereinrichtung 160 sorgt außerdem für eine an den jeweiligen Bedarf angepasste Abgabe elektrischer Leistung an das Stromnetz.

Die Antriebswelle 162 des elektrischen Generators 160 ist über eine Lageranordnung 163 gelagert. Die Lageranordnung 163 weist ein Wälzlager 1 der zuvor beschriebenen Art mit drucksensitiven Wälzkörpern sowie die z. B. anhand der Figur 4 beschriebenen Komponenten wie die Spannungsquelle 7 und den Stromsensor 8 auf. Die Lageranordnung 163 ist über elektrische Leitungen mit einer Überwachungseinrichtung 12 der zuvor beschriebenen Art verbunden. Die Überwachungseinrichtung 12 bestimmt aus der durch das Wälzlager 1 erfassten elektrischen Kenngröße Schlupfzustände und Zustände erhöhter Belastung oder Abnutzung des Wälzlagers und erzeugt ein solche Zustände charakterisierendes Ausgangssignal. Dieses Ausgangssignal wird von der Überwachungseinrichtung 12 an die Steuereinrichtung 160 abgegeben. Die Steuereinrichtung 160 ist dazu eingerichtet, z. B. durch entsprechende Programmierung, das Steuersignal zu empfangen und bei Schlupfzuständen und bei erkannter erhöhter Belastung oder Abnutzung des Wälzlagers die Belastung oder Abnutzung des Wälzlagers zu vermindern oder zu vermeiden. Beispielsweise kann die Steuereinrichtung 160 zur Verminderung ungünstiger Belastungen des Wälzlagers durch den Elektromotor 165 das Maschinengehäuse soweit drehen, dass eine unerwünschte Belastung eliminiert wird. Hierbei empfängt die Steuereinrichtung 160 fortwährend das Ausgangssignal der Überwachungseinrichtung 12 und kann hieran erkennen, wenn ein Zustand verminderter Belastung des Wälzlagers erreicht ist. Eine weitere Möglichkeit besteht darin, dass die Steuereinrichtung 160 z. B. bei sich auf Grund von Windstärke-Veränderungen ergebenden Lastveränderungen an dem Wälzlager die Energieabgabe in das Stromnetz entsprechend anpasst, um hierdurch eine Belastung des Wälzlagers zu verringern.

Bei den zuvor beschriebenen Ausführungsbeispielen wurde von einem Wälzlager in Form eines Radiallagers ausgegangen. Ein Radiallager ist vorwiegend für die Aufnahme von Radialkräften ausgebildet. Die zuvor beschriebenen Anwendungsmöglichkeiten und Vorteile gelten auch für Wälzlager, die z. B. als Axiallager oder als Mischform aus Radiallager und Axiallager ausgebildet sind. Die Figur 17 zeigt beispielhaft ein Axiallager 1, das zur Aufnahme von Axialkräften ausgelegt ist. Hierbei ist als erster Lagerring 2 der in Figur 17 unten abgebildete Lagerring vorgesehen, als zweiter Lagerring 3 der oben abgebildete Lagerring. Somit entspricht mit Bezugnahme auf die vorhergehenden Ausführungen der untere Lagerring 2 dem inneren Lagerring eines Radiallagers. Der obere Lagerring 3 entspricht dem äußeren Lagerring. Wie erkennbar ist, sind bei dem Axiallager 1 gemäß Figur 17 eine Vielzahl von Wälzkörpern 4 zwischen dem oberen Lagerring 3 und dem unteren Lagerring 2 angeordnet. Zudem ist ein Wälzkörperkäfig 170 dargestellt, durch den die Wälzkörper 4 in einem vorbestimmenden Abstand voneinander gehalten werden.

## Patentansprüche

1. Rotierbares Wälzlager (1) mit einem ersten Lagerring (2), einem gegenüber dem ersten Lagerring (2) rotierbaren zweiten Lagerring (3) und einer Mehrzahl von Wälzkörpern (4), die zwischen dem ersten und dem zweiten Lagerring (2, 3) angeordnet sind, **dadurch gekennzeichnet, dass** wenigstens ein Wälzkörper (4) als elektrischer Sensor ausgebildet ist, derart, dass der Wälzkörper (4) dazu eingerichtet ist, eine direkt elektrisch erfassbare Kenngröße in Abhängigkeit von einer auf diesen Wälzkörper (4) ausgeübten Kraft zu ändern.

2. Wälzlager nach Anspruch 1, **dadurch gekennzeichnet, dass** der als elektrischer Sensor ausgebildete Wälzkörper (4) aus einem piezoresistiven Material hergestellt ist oder eine auf einen inneren Kern (5) des Wälzkörpers aufgebrachte Beschichtung (6) aus einem piezoresistiven Material aufweist.

3. Wälzlager nach Anspruch 2, **dadurch gekennzeichnet, dass** die Beschichtung (6) aus dem piezoresistiven Material mit dotiertem oder undotiertem Kohlenwasserstoff oder reinem Kohlenstoff hergestellt ist.

4. Wälzlager nach Anspruch 2 oder 3, **dadurch gekennzeichnet, dass** auf den Wälzkörper (4) bzw. die piezoresistive Beschichtung (6) wenigstens eine Verschleißschutzschicht (11) aufgebracht ist.

5. Wälzlager nach Anspruch 4, **dadurch gekennzeichnet, dass** die Verschleißschutzschicht (11) eine Mehrzahl leitfähiger Zonen aufweist, die gegeneinander isoliert oder zumindest hochohmig im Vergleich zu den Wälzkörpern (4) sind.

6. Wälzlager nach einem der vorhergehenden Ansprüche, **dadurch gekennzeichnet, dass** mehrere Wälzkörper (4) als elektrische Sensoren ausgebildet sind und deren Abstände voneinander in Umfangsrichtung des Wälzlagers (1) ungleich sind.

7. Wälzlager nach einem der vorhergehenden Ansprüche, **dadurch gekennzeichnet, dass** mehrere oder alle Wälzkörper (4) als elektrische Sensoren ausgebildet sind, wobei wenigstens eine Teilmenge dieser Wälzkörper (4) eine andere elektrische Charakteristik aufweist als die übrigen als elektrische Sensoren ausgebildeten Wälzkörper (4).

8. Wälzlager nach Anspruch 6, **dadurch gekennzeichnet, dass** Wälzkörper (4) mit gleicher elektrischer Charakteristik asymmetrisch über den Umfang des Wälzlagers (1) verteilt angeordnet sind.

9. Wälzlager nach einem der vorhergehenden Ansprüche, **dadurch gekennzeichnet, dass** der erste Lagerring (2) und/oder der zweite Lagerring (3) im Bereich der Abrollbahn der Wälzkörper (4) hinsichtlich der direkt elektrisch erfassbaren Kenngröße wenigstens eine Inhomogenität aufweist, insbesondere wenigstens eine definierte Leitfähigkeitsänderung.

10. Wälzlager (1) nach einem der vorhergehenden Ansprüche, **dadurch gekennzeichnet, dass** der Wälzkörper (4) aus oder unter Verwendung von drucksensitiven Partikeln, die selbst eine direkt elektrisch erfassbare Kenngröße in Abhängigkeit von einer auf sie ausgeübten Kraft ändern, hergestellt ist.

11. Wälzlager (1) nach Anspruch 10, **dadurch gekennzeichnet, dass** der Wälzkörper (4) aus einer Mischung der drucksensitiven Partikel und von Metallpartikeln hergestellt ist.

12. Wälzlager (1) nach einem der vorhergehenden Ansprüche, **dadurch gekennzeichnet, dass** der Wälzkörper (4) aus oder unter Verwendung von Metallpartikeln hergestellt ist, die eine auf einen inneren Metallkern aufgebrachte Beschichtung aus einem piezoelektrischen oder piezoresistiven Material aufweisen.

13. Wälzlager (1) nach einem der vorhergehenden Ansprüche, **dadurch gekennzeichnet, dass** der erste Lagerring (2) und/oder der zweite Lagerring (3) im Bereich der Abrollbahn (135) der Wälzkörper (4) wenigstens zwei über den Umfang der Abrollbahn (135) verteilt angeordnete, gegeneinander isolierte elektrische Kontaktflächen (110, 111, 120, 121, 122, 123, 124) aus elektrisch leitfähigem Material zur Kontaktierung der Wälzkörper (4) aufweist.

14. Wälzlager (1) nach einem der vorhergehenden Ansprüche, **dadurch gekennzeichnet, dass** der erste Lagerring (2) und/oder der zweite Lagerring (3) im Bereich der Abrollbahn (135) der Wälzkörper (4) in Richtung der Drehachse (150) des Wälzlagers (1) verteilt angeordnete, gegeneinander isolierte elektrische Kontaktflächen (130, 131) aus elektrisch leitfähigem Material zur Kontaktierung der Wälzkörper (4) aufweist.

15. Wälzkörper für ein Wälzlager (1) nach einem der vorhergehenden Ansprüche.

16. Einrichtung mit einem Wälzlager (1) nach einem der vorhergehenden Ansprüche und einer elektrischen Überwachungseinrichtung (7, 8, 12), wobei die Überwachungseinrichtung (7, 8, 12) elektrisch mit dem Wälzlager (1) verbunden ist und dazu eingerichtet ist, die direkt elektrisch erfassbare Kenngröße der Wälzkörper (4) bzw. des Wälzlagers (1) zu erfassen.

17. Einrichtung nach Anspruch 16, **dadurch gekennzeichnet, dass** die Überwachungseinrichtung (7, 8, 12) dazu eingerichtet ist, aus der erfassten elektrischen Kenngröße Schlupfzustände und/oder Zustände erhöhter Belastung oder Abnutzung des Wälzlagers (1) zu bestimmen und ein solche Zustände charakterisierendes Ausgangssignal zu erzeugen.

18. Einrichtung nach Anspruch 17, **dadurch gekennzeichnet, dass** die Überwachungseinrichtung dazu eingerichtet ist, bei erkanntem Schlupfzustand und/oder bei erkannter erhöhter Belastung oder Abnutzung des Wälzlagers (1) ein Steuersignal zu erzeugen, wobei eine Steuereinrichtung (160) vorgesehen ist, die dazu eingerichtet ist, das Steuersignal zu empfangen und bei erkanntem Schlupfzustand und/oder erkannter erhöhter Belastung oder Abnutzung des Wälzlagers (1) die aktuelle oder eine durch den Schlupfzustand bevorstehende Belastung oder Abnutzung des Wälzlagers (1) zu vermindern oder zu vermeiden.

19. Einrichtung nach Anspruch 18, **dadurch gekennzeichnet, dass** die Steuereinrichtung (160) dazu eingerichtet ist, zur Vermeidung oder Verminderung der erhöhten Belastung oder Abnutzung die auf das Wälzlager (1) einwirkende Drehgeschwindigkeit zumindest zeitweise zu reduzieren und/oder nur langsam zu erhöhen und/oder eine detektierte Belastung des Wälzlagers (1) nur langsam zu erhöhen.

20. Einrichtung nach einem der Ansprüche 16 bis 19, **dadurch gekennzeichnet, dass** die Überwachungseinrichtung (7, 8, 12) dazu eingerichtet ist, aus der erfassten elektrischen Kenngröße ein aktuelles Belastungsmaximum und/oder Belastungsminimum des Wälzlagers (1) entlang der Abrollbahn (135) der Wälzkörper (4) über den Umfang des Wälzlagers (1) und/oder in Richtung der Drehachse (150) des Wälzlagers (4) örtlich zu bestimmen.

21. Einrichtung nach einem der Ansprüche 16 bis 20, **dadurch gekennzeichnet, dass** die Überwachungseinrichtung (7, 8, 12) dazu eingerichtet ist, aus der erfassten elektrischen Kenngröße eine Radialkraft (F_{rad}), eine Axialkraft (Fₐₓ) und/oder ein Biegemoment (M), das auf das Wälzlager (1) einwirkt, und/oder die Wirkrichtung des Biegemoments (M) zu bestimmen.

22. Einrichtung mit einem Wälzlager (1) nach einem der vorhergehenden Ansprüche, wobei die Überwachungseinrichtung (7, 8, 12) elektrisch nur mit dem zweiten Lagerring (3) oder nur mit dem ersten Lagerring (2) des Wälzlagers (1) verbunden ist und dazu eingerichtet ist, eine elektrische Kenngröße zwischen wenigstens zwei gegeneinander elektrisch isolierten Kontaktflächen (110, 111, 120, 121, 122, 123, 124, 130, 131) des zweiten Lagerrings (3) oder des ersten Lagerrings (2) zu erfassen.
